# EUROPÄISCHE PATENTANMELDUNG

(11) **EP 1 609 684 A2**
(43) Veröffentlichungstag der Anmeldung: **28.12.2005**
(21) Anmeldenummer: 05013191.1
(22) Anmeldetag: 18.06.2005
(51) Int. Cl.: B60R 21/02

(54) **Rückhaltesystem für einen Fahrer eines Fahrzeugs**

(30) Priorität: 24.06.2004 DE 202004009927 U
(71) Anmelder: Sauermann, Hans, 85119 Ernsgaden (DE)
(72) Erfinder: Sauermann, Hans, 85119 Ernsgaden (DE)
(74) Vertreter: Witzany, Manfred

(57) **Zusammenfassung**

Ein Rückhaltesystem (3) für einen Fahrer eines Fahrzeugs (1) weist mindestens einen neben einem Fahrersitz (2) angeordneten Schutzbügel (4) auf. Dieser Schutzbügel (4) ist um eine in etwa horizontale Schwenkachse (8) zwischen einer den Fahrer sichernden Rückhaltestellung und einer Freigabestellung verschwenkbar, in der der Fahrer einfach zu- und aussteigen kann. In der Rückhaltestellung ist der Schutzbügel (4) arretierbar. Um den Schutzbügel (4) wieder in die Freigabestellung bringen zu können, muß die Arretierung gelöst werden. Zu diesem Zweck befindet sich innerhalb der Außenkontur des Schutzbügels (4) eine Handhabe (22), die am Schutzbügel (4) gehalten ist. Diese Handhabe steht mit einer der Schwenkachse (8) des Schutzbügels (4) zugeordneten Arretiervorrichtung (16) in Wirkverbindung.

## Beschreibung

Die Erfindung betrifft ein Rückhaltesystem für einen Fahrer eines Fahrzeugs gemäß dem Oberbegriff des Patentanspruchs 1.

Aus der DE 202 02 522 U1 ist ein gattungsgemäßes Rückhaltesystem bekannt. Dieses Rückhaltesystem wird im wesentlichen von einem Schutzbügel gebildet, der einem Fahrersitz eines Flurförderfahrzeugs zugeordnet ist. Dieser Schutzbügel kann um eine horizontale Achse zwischen einer Rückhaltestellung und einer Freigabestellung verschwenkt werden. In der Rückhaltestellung ist der Schutzbügel außerdem arretierbar. Dieses Rückhaltesystem hat sich in der Praxis gut bewährt und bildet den Ausgangspunkt der vorliegenden Erfindung.

Der Erfindung liegt die Aufgabe zugrunde, ein Rückhaltesystem der eingangs genannten Art zu schaffen, das sich durch eine einfache und sichere Arretierung des Schutzbügels in der Rückhaltestellung auszeichnet.

Diese Aufgabe wird erfindungsgemäß mit den Merkmalen des Patentanspruchs 1 gelöst.

Das Rückhaltesystem gemäß Anspruch 1 weist mindestens einen Schutzbügel auf, der einem Fahrersitz zugeordnet ist. Dieser Schutzbügel ist zwischen einer Rückhaltestellung und einer Freigabestellung um eine horizontale Schwenkachse verschwenkbar gehalten. In der Rückhaltestellung ist er dabei vorzugsweise neben dem Fahrersitz angeordnet, so daß im Falle des Umkippens des Fahrzeugs der Fahrer auf dem Fahrersitz zurückgehalten wird. Dies verhindert zuverlässig, daß der Fahrer beim Umkippen des Fahrzeugs unter dieses gerät. In der Freigabestellung ist der Schutzbügel nach oben verschwenkt, um ein ungehindertes Zu- und Absteigen des Fahrers vom Fahrzeug zu ermöglichen. Der Schutzbügel ist in der Rückhaltestellung vorzugsweise selbsttätig arretierbar Zur Lösung der Arretierung des Schutzbügels ist innerhalb der Außenkontur desselben eine Handhabe vorgesehen. Diese Handhabe erleichtert die Lösung der Arretierung des Schutzbügels, da sie in der Nähe der Hand des Fahrers vorgesehen ist. Außerdem verhindert diese Anordnung der Handhabe ein versehentliches Lösen der Arretierung, wenn der Fahrer beim Umkippen des Fahrzeugs mit seinem Becken oder Oberschenkel gegen den Schutzbügel gedrückt wird. Auf diese Weise ergibt sich eine sehr sichere Rückhaltewirkung.

Zur Erzielung einer ergonomischen Bedienbarkeit der Handhabe ist diese gemäß Anspruch 2 relativ zum Schutzbügel verschiebbar oder um eine in etwa horizontale Achse verschwenkbar. Vorzugsweise erfolgt die Verschiebung der Handhabe in Längsrichtung des Schutzbügels bzw. liegt die Schwenkachse quer zum Fahrzeug. Auf diese Weise ist sichergestellt, daß die Handhabe innerhalb der Ebenenerstreckung des Schutzbügels verstellt wird. Dies hat den Vorteil, daß ein unbeabsichtigtes Verstellen der Handhabe bei umkippendem Fahrzeug nicht möglich ist.

Zur Übermittlung der Bewegung der Handhabe an die Arretiervorrichtung für den Schutzbügel hat sich gemäß Anspruch 3 ein Seilzug, Bowdenzug bzw. ein Gestänge bewährt. Auf diese Weise ergibt sich ein einfacher mechanischer Aufbau, so daß hierdurch das Gesamtgewicht des Schutzbügels nur unwesentlich vergrößert wird.

Um zu verhindern, daß der Fahrer das Fahrzeug bewegt, ohne den Schutzbügel zu arretieren, ist es gemäß Anspruch 4 vorteilhaft, wenn die Arretiervorrichtung mit einem Sitzkontaktschalter bzw. mit einem den Fahrzustand überwachenden Sensor in Wirkverbindung steht. Insbesondere ist daran gedacht, auf diese Weise eine Lösung der Arretierung des Schutzbügels bei sich bewegendem Fahrzeug bzw. bei angehobener Gabel zu verhindern. Eine einfache und gleichzeitig wirkungsvolle Ausbildung des Schutzbügels in Form eines U- oder O-förmig gebogenen Rohres ergibt sich aus Anspruch 5. Dabei sind die beiden Schenkel des Rohres mit einem Block verbunden, der von der Schwenkachse des Schutzbügels durchdrungen ist. Dieser Block bildet gleichzeitig das Schwenklager für den Schutzbügel. Vorzugsweise ist innerhalb dieses Blocks auch die Arretiervorrichtung für den Schutzbügel vorgesehen. Dies erleichtert den Aufbau der Arretiervorrichtung erheblich. Die Anwendung eines massiven Blocks im Bereich der Schwenkachse spielt für die leichte Verschwenkbarkeit des Schutzbügels nur eine untergeordnete Rolle, da dieser nur ein geringes Drehmoment auf den Schutzbügel ausübt. Daher kann der Block problemlos massiv ausgebildet sein. Bei diesem Aufbau ist die Handhabe innerhalb der Innenkontur des Rohres vorgesehen, so daß sie innerhalb der Schutzbügelebene zu liegen kommt.

Zur Erzielung eines einfachen und gleichzeitig stabilen Aufbaus ist es gemäß Anspruch 6 günstig, wenn die Handhabe an einem Träger vorgesehen ist, der den Schutzbügel längs durchsetzt. Dieser Träger wird dabei von einem längs zum Schutzbügel verlaufenden Stab oder Rohr gebildet, so daß die Handhabe relativ frei innerhalb der Innenkontur des Schutzbügels plaziert werden kann. Dies ermöglicht eine günstige und ergonomische Plazierung der Handhabe.

Der Träger ist gemäß Anspruch 7 beidendig am Schutzbügel festgelegt, um einen stabilen Aufbau des gesamten Schutzbügels und insbesondere der Arretiervorrichtung zu gewährleisten. Der Träger erhöht dabei zusätzlich die Biege- und Bruchsicherheit des Schutzbügels. Außerdem verhindert der Träger auf diese Weise, daß beispielsweise ein Oberschenkel des Fahrers teilweise durch eine Öffnung des Schutzbügels hindurchrutscht, was zu Verletzungen führen könnte.

Zur Erzielung eines ergonomischen Aufbaus des Schutzbügels ist es gemäß Anspruch 8 vorteilhaft, wenn die Handhabe näher am freien Ende des Schutzbügels als an der Schwenkachse liegt. Auf diese Weise läßt sich die Handhabe bequem mit einer Hand erfassen und die Arretierung des Schutzbügels aufheben.

Schließlich ist es gemäß Anspruch 9 günstig, wenn die Handhabe in Richtung der Arretierstellung des Schutzbügels vorgespannt ist. Auf diese Weise wird ein unbeabsichtigtes Lösen der Arretierung des Schutzbügels verhindert.

Der Erfindungsgegenstand wird beispielhaft anhand der Zeichnung erläutert, ohne den Schutzumfang zu beschränken.

### Es zeigt:

- Figur 1: eine Schnittdarstellung durch eine erste Ausführungsform eines Rückhaltesystems und
- Figur 2: eine zweite Ausführungsform eines Rückhaltesystems.

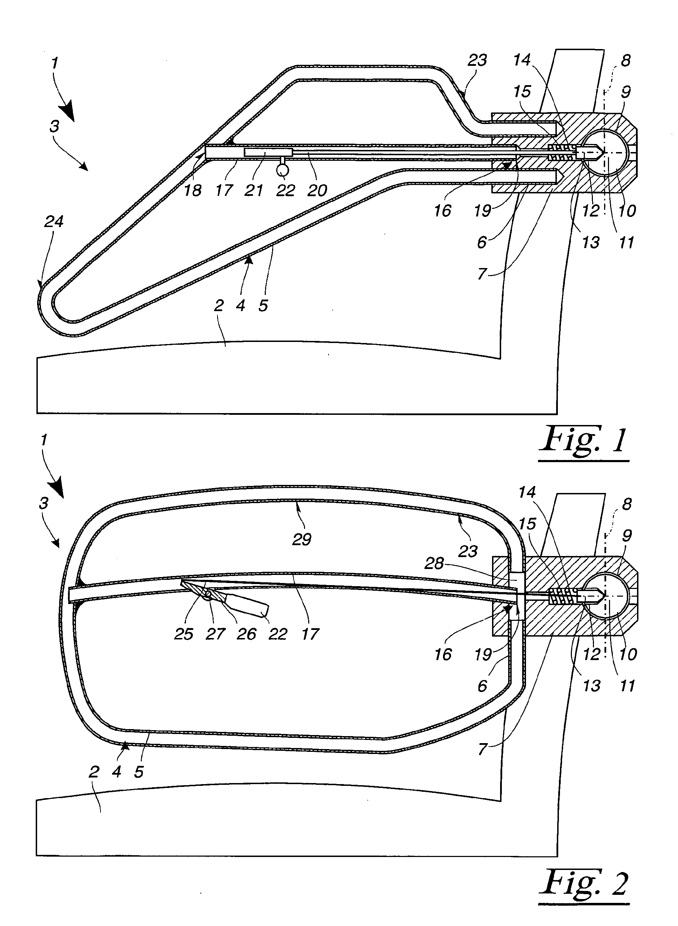

Figur 1 zeigt einen Ausschnitt eines Fahrzeugs 1, insbesondere eines Flurförderfahrzeugs. Das Fahrzeug 1 weist einen Fahrersitz 2 auf, der in einer nicht dargestellten, offenen Kabine vorgesehen ist. Um zu verhindern, daß der auf dem Fahrersitz 2 sitzende Fahrer beim Umkippen des Fahrzeugs 1 unter dieses gerät, ist ein Rückhaltesystem 3 vorgesehen.

Dieses Rückhaltesystem 3 besteht im wesentlichen aus einem oder zwei seitlich neben dem Fahrersitz 2 angeordneten Schutzbügeln 4, die jeweils von einem gebogenen Rohr 5 gebildet sind. Das Rohr 5 ist dabei im wesentlichen U-förmig gebogen, wobei die beiden Schenkel 6 in einem gemeinsamen Block 7 aufgenommen sind. Dieser Block 7 wird von einer horizontalen Schwenkachse 8 durchsetzt, um die der Schutzbügel 4 von der dargestellten Rückhaltestellung im Uhrzeigersinn in eine angehobene Freigabestellung verschwenkbar ist. Der Block 7 weist hierzu eine Bohrung 9 auf, die ein Schwenklager 10 bildet. In diese Bohrung 9 greift eine Achse 11 ein, gegenüber der der Schutzbügel 4 verschwenkbar ist.

Die Achse 11 weist eine Arretierbohrung 12 auf, die quer zur Schwenkachse 8 ausgerichtet ist. In diese Arretierbohrung 12 greift ein Arretierbolzen 13 ein, der federnd gegen die Arretierbohrung 12 vorgespannt ist. Dieser Arretierbolzen 13 ist in einer Längsbohrung 14 des Blocks 7 verschiebbar geführt und von einer Feder 15 gegen die Arretierbohrung 12 vorgespannt. Die Arretierbohrung 12, der Arretierbolzen 13 und die Feder 15 bilden zusammen eine Arretiervorrichtung 16 für den Schutzbügel 4.

In Verlängerung des Arretierbolzens 13 weist der Schutzbügel 4 einen Träger 17 auf, der von einem Rohr gebildet ist. Dieser Träger 17 ist mit einem Ende 18 im Rohr 5 des Schutzbügels 4 festgelegt. Sein Gegenende 19 ist im Block 7 festgelegt. Auf diese Weise ergibt sich ein besonders stabiler Aufbau des Schutzbügels 4.

Im Rohr 17 verläuft ein Gestänge 20, welches den Arretierbolzen 13 mit einem Schlitten 21 verbindet. Der Schlitten 21 ist im Rohr 17 längs verschiebbar geführt. Der Schlitten 21 weist außerdem eine Handhabe 22 auf, die aus dem Rohr 17 herausgeführt ist. Durch Verschieben der Handhabe 22 in Richtung des Endes 18 des Rohres 17 läßt sich der Arretierbolzen 13 zurückziehen, so daß die Arretierung des Schutzbügels 4 freigegeben ist. Anschließend läßt sich der Schutzbügel 4 in die nicht dargestellte Freigabestellung verschwenken.

Zur Erzielung einer ausreichenden Schutzwirkung des Schutzbügels 4 ist dieser im außerhalb des Blocks 7 liegenden Bereich 23 nach oben bzw. nach unten gezogen. Auf diese Weise ergibt sich ein entsprechender Abstand des Rohres 5 vom Träger 17. Diese Teile 5, 17 verhindern zusammen ein Durchrutschen des Fahrers beim Umkippen des Fahrzeugs 1. Im Bereich des unteren freien Endes 24 ist der Schutzbügel 4 tief nach unten gezogen, so daß er sich nur noch knapp oberhalb oder in Höhe des Fahrersitzes 2 befindet. Hierdurch wird besonders zuverlässig verhindert, daß ein Oberschenkel des Fahrers unter den Schutzbügel 4 hindurch rutscht.

Figur 2 zeigt eine alternative Ausführungsform des Rückhaltesystems 3, wobei gleiche Bezugszeichen gleiche Teile benennen. Im folgenden werden lediglich die Änderungen zur Ausführungsform gemäß Figur 1 erläutert.

Der Träger 17 ist zur Erzielung einer optimalen Schutzwirkung leicht nach oben gebogen. Auf diese Weise wird der Träger 17 besonders günstig in das Schutzsystem eingebunden. Innerhalb des Trägers 17 ist ein Seilzug 25 vorgesehen, der auch als Bowdenzug ausgebildet sein kann. Dieser Seilzug 25 ist einerseits am Arretierbolzen 13 und andererseits an einer Wippe 26 festgelegt. Diese Wippe 26 ist am Träger 17 über ein Schwenklager 27 angelenkt und weist eine aus dem Träger 17 herausragende Handhabe 22 auf. Diese Handhabe 22 kann einfach durch gleichzeitiges Umfassen des Trägers 17 und der Handhabe 22 nach oben gedrückt werden. Dabei wird die Wippe 26 verschwenkt und der Seilzug 25 bzw. Bowdenzug zusammen mit dem Arretierbolzen 13 zurückgezogen. Auf diese Weise ergibt sich eine einfache und ergonomisch günstige Bedienbarkeit der Arretiervorrichtung 16.

Im Gegensatz zur Ausführungsform gemäß Figur 1 ist das Rohr 5 des Schutzbügels 4 annähernd rechteckförmig ausgebildet, wobei die Schenkel 6 in einer Durchgangsbohrung 28 des Blocks 7 festgelegt sind. Das Rohr 5 ist im oberen Bereich 29 in etwa parallel zum Träger 17 nach oben gebogen. Dies ergibt eine besonders vorteilhafte Schutzwirkung des Schutzbügels 4.

### Bezugszeichenliste

- 1: Fahrzeug
- 2: Fahrersitz
- 3: Rückhaltesystem
- 4: Schutzbügel
- 5: Rohr
- 6: Schenkel
- 7: Block
- 8: Schwenkachse
- 9: Bohrung
- 10: Schwenklager
- 11: Achse
- 12: Arretierbohrung
- 13: Arretierbolzen
- 14: Längsbohrung
- 15: Feder
- 16: Arretiervorrichtung
- 17: Träger
- 18: Ende
- 19: Gegenende
- 20: Gestänge
- 21: Schlitten
- 22: Handhabe
- 23: Bereich
- 24: freies Ende
- 25: Seilzug
- 26: Wippe
- 27: Schwenklager
- 28: Durchgangsbohrung
- 29: oberer Bereich

## Patentansprüche

1. Rückhaltesystem für einen Fahrer eines Fahrzeugs (1), insbesondere eines Flurförderfahrzeugs (1), das mindestens einen Fahrersitz (2) aufweist, wobei das Rückhaltesystem (3) mindestens einen dem Fahrersitz (2) zugeordneten Schutzbügel (4) aufweist, der um eine in etwa horizontale Schwenkachse (8) zwischen einer den Fahrer sichernden Rückhaltestellung und einer das Zu- und Aussteigen des Fahrers ermöglichenden Freigabestellung verschwenkbar und zumindest in der Rückhaltestellung arretierbar ist, **dadurch gekennzeichnet, daß** zur Lösung der Arretierung des Schutzbügels (4) eine innerhalb dessen Außenkontur vorgesehene Handhabe (22) am Schutzbügel (4) gehalten ist, welche mit einer der Schwenkachse (8) zugeordneten Arretiervorrichtung (16) in Wirkverbindung steht.

2. Rückhaltesystem nach Anspruch 1, **dadurch gekennzeichnet, daß** die Handhabe (22) relativ zum Schutzbügel (4) verschiebbar oder um eine in etwa horizontale Achse (27) verschwenkbar ist.

3. Rückhaltesystem nach Anspruch 1 oder 2, **dadurch gekennzeichnet, daß** die Handhabe (22) mit einem Seilzug (25), Bowdenzug oder einem Gestänge (20) mit der Arretiervorrichtung (16) in Wirkverbindung steht.

4. Rückhaltesystem nach mindestens einem der Ansprüche 1 bis 3, **dadurch gekennzeichnet, daß** die Arretiervorrichtung (16) mit einem Sitzkontaktschalter und/oder mit mindestens einem den Fahrzustand überwachenden Sensor in Wirkverbindung steht.

5. Rückhaltesystem nach mindestens einem der Ansprüche 1 bis 4, **dadurch gekennzeichnet, daß** der Schutzbügel (4) von mindestens einem in etwa U- oder O-förmig gebogenen Rohr (5) gebildet ist, dessen Schenkel (6) mit einem von der Schwenkachse (8) durchdrungenen und ein Schwenklager (10) bildenden Block (7) verbunden sind, wobei die Handhabe (22) innerhalb der Innenkontur des Rohres (5) vorgesehen ist.

6. Rückhaltesystem nach mindestens einem der Ansprüche 1 bis 5, **dadurch gekennzeichnet, daß** die Handhabe (22) an einem Träger (17), vorzugsweise in Form eines Stabes oder Rohres vorgesehen ist, der den Schutzbügel (4) längs durchsetzt.

7. Rückhaltesystem nach Anspruch 6, **dadurch gekennzeichnet, daß** der Träger (17) beidendig am Schutzbügel (4) festgelegt ist.

8. Rückhaltesystem nach mindestens einem der Ansprüche 1 bis 7, **dadurch gekennzeichnet, daß** die Handhabe (22) näher am freien Ende (24) des Schutzbügels (4) als an der Schwenkachse (8) liegt.

9. Rückhaltesystem nach mindestens einem der Ansprüche 1 bis 8, **dadurch gekennzeichnet, daß** die Handhabe (22) in Richtung der Arretierstellung des Schutzbügels (4) vorgespannt ist.
